# EUROPEAN PATENT SPECIFICATION

(11) **EP 1 299 974 B1**
(45) Date of publication and mention of the grant of the patent: **15.09.2010**
(21) Application number: 01934775.6
(22) Date of filing: 22.05.2001
(51) Int. Cl.: H04L 12/26, H04L 12/56, H04L 29/06, H04Q 11/04

(54) **METHOD AND APPARATUS FOR INTERCEPTING PACKETS IN A PACKET-ORIENTED NETWORK**
VERFAHREN UND VORRICHTUNG ZUM ABFANGEN VON PAKETEN IN EINEM PAKETORIENTIERTEN NETZ
PROCEDE ET APPAREIL D'INTERCEPTION DE PAQUETS DANS UN RESEAU ORIENTE PAQUETS

(30) Priority: 24.05.2000 SE 0001930
(43) Date of publication of application: 09.04.2003
(73) Proprietor: Telefonaktiebolaget LM Ericsson (publ), 164 83 Stockholm (SE)
(72) Inventor: WALLINDER, Sören, S-136 70 Haninge (SE); BJÖRNSSON, Stefan, S-149 45 Nynäshamn (SE); LINDBERG, Niclas, S-126 35 Hägersten (SE)
(74) Representative: Tonscheidt, Andreas
(86) International application number: PCT/SE2001/001144
(87) International publication number: WO 2001/091374

(56) References cited:
- EP-A1- 1 142 218
- WO-A1-00/42742
- WO-A1-99/29089
- WO-A2-99/17499
- US-A- 5 710 971
- YEN S.L. ET AL.: 'Intelligent MTS monitoring system' SECURITY TECHNOLOGY, 1994. PROCEEDINGS. IEEE, 28TH ANNUAL 1994 INTERNATIONAL CONFERENCE ON 12 October 1994 - 14 October 1994, pages 185 - 187, ISBN 0-7803-1479-4, XP002946370

## Description

### Technical Field of the Invention

The present invention relates to a method, a system, a node, a monitoring means, a router, a gateway, an agent apparatus, an agent computer program, an interception computer program and an interception control computer program for intercepting packets in a packet-oriented network.

### Description of Related Art

In many countries the law enforcement personnel conducts court authorised electronic lawful interception (also called wiretapping) of target telephone calls in order to prevent crimes. Therefore many telephone operators need to be able to perform the lawful interception on behalf of the authority. However, the technical progress and common utilisation of packet-oriented networks, such as a TCP/IP-network, also require intercepting and monitoring signals associated with packet transfers. Therefore also internet service providers on behalf of the authority require means to conduct lawful interception in packet oriented networks. A major difference between lawful interception in traditional circuit switched telephone networks and packet oriented networks is that the packet oriented networks have a strict separation between control signalling and media stream, such as Real Time Protocol (RTP) packets. Because of this separation, the control signalling and the media stream usually have different routes in the packet-oriented network.

WO-99/55062-A1 discloses a method and system for intercepting and monitoring signals associated with a telephone number in a communication network. The communication network could be a TCP/IP-network capable of supporting Voice over Internet Protocol (VoIP), according to the description. The network comprises switching nodes, where one of the switching nodes is connected to a collection node for interception. When a first switching node identifies a telephone number belonging to a person that is to be intercepted (also called a target), a trigger sends a signal to a signal transmission node, which then orders the first switching node to send the data from the target to a second switching node, which is connected to the collection node. All the data - no matter what kind of data it is - sent by a target is transmitted to and replicated by the collection node before the data further is transmitted to a third switching node, which is a controlling node for a fax machine, telephone, desktop computer and a video transmitter/receiver. Thus the signals that are to be intercepted must be transmitted a different way to the receiver than if the signals were not intercepted. Means for intercepting and monitoring signals triggered by e.g. accessing certain internet homepages and e-mail addresses as well as any means for identifying certain data packets are not disclosed.

Further, WO 00/42 742 discloses an interception method and system for performing a lawful interception in a packet network such as the GPRS or UMTS network is described. A first network element having an intercepting function for intercepting data packets is provided, said interception function being controlled by an interception control means implemented in a second network element, wherein an intercepted data packet is transmitted from the first network element via the packet network to an interception getaway element providing an interface to an intercepting authority. The intercepted data packet is transmitted via a secure tunnel provided by an encryption processing.

US 5,710,971 refers to interception in a radio communication network, disclosing an earth terminal controller comprising a selective duplication section, a mobile switching center for controlling the selective duplication section and a monitoring center being connected to the mobile switching center, wherein the mobile switching center orders the selective duplication section to start a duplication process, and the switching center forwards duplicated packets received from the selective duplication section to the monitoring center.

### Summary

It is a general object of the present invention to provide a method and means for performing lawful interception of packets in a packet-oriented network as well as providing a highly flexible system that easily can be implemented in the network.

It is also a general object of the present invention to provide a system that does not force a media stream to and from a target to be routed to a separate node that is connected to a collection node, since this delays the media stream.

The present invention therefore provides a method for intercepting packets in a packet-oriented network, comprising the steps of: providing at least one interception means for intercepting and copying information from a packet being transmitted in the network; activating an interception control means for controlling the at least one interception means; initiating communication between the interception control means and at least one monitoring means for monitoring copied information from the packet; establishing a connection between the interception control means and at least one of the at least one interception means; transmitting interception related information from the interception control means to the monitoring means, for preparing the monitoring means to receive the copied information; ordering the one of at least one interception means to copy the information by transmitting a signal from the interception control means; and transmitting the copied information to the at least one monitoring means. Hereby a flexible and easily implemented method for lawful interception of packets is achieved, thus giving the possibility to make a lawful interception on e.g. multipart video communications, e-mails, chat, computer programs, movies, music files and picture files.

Preferably the method comprises the steps of: providing information about a user identity to the interception control means, which analyses the user identity to determine if a packet related to the user identity is to be intercepted, and identifying the type of the packet, where the identification of the type of the packet is done by at least one of the interception control means, the at least one interception means, and the at least one monitoring means.

Furthermore, the method may comprise the step of installing the at least one interception means in a router in the network, in an agent apparatus for simplifying firewall definitions and terminating communication between a local-area network and another network, or in a gateway. Hereby is achieved that the number of interception means and their positions may be selected in order to achieve a custom made solution for an effective lawful interception.

The one of the at least one interception means may directly transmit the copied information to the at least one monitoring means or to the interception control means, which then transmits the copied information to the monitoring means. This also gives a method that gives several possible ways of performing the lawful interception. The reason for transmitting copied information first to the interception control means is for instance to filter the copied information and/or changing the copied information to another format before it is sent to the monitoring means.

Since the method involves transmission of sensitive information, the method may comprise the step of encrypting the copied information before it is transmitted to the at least one monitoring means or the interception control means. The method may also comprise the step of encrypting any interception related information, e.g. being transmitted between the interception control means and the at least one monitoring means. Hereby is achieved that if someone for some reason eavesdrop the information being transmitted between the interception control means, the interception means and the monitoring means, will find it impossible to understand.

The interception related information may comprise time data for identifying the beginning, end and duration of a connection between two user identities.

In order to have a list of user identities that are targets at few places as it is sensitive information, the method may comprise the step of storing at least one user identity, whose communication with other user identities shall be intercepted, in the interception control means.

Suitably, the method may comprise the step of transmitting information about the addresses of communicating user identities, whose communication is to be intercepted, and the address of the at least one monitoring means from the interception control means to the at least one of the at least on interception means. Hereby is achieved that the interception function knows where to send the copied information and which packets that are going to be intercepted.

The present invention also relates to an interception system for intercepting packets in a packet-oriented network, comprising at least one interception means for intercepting and copying information from a packet being transmitted in the network, an interception control means intended for installation in a node in the network for controlling the at least one interception means and at least one monitoring means for monitoring copied information being transmitted from the at least one interception means and communicating with the interception control means. Hereby a system for performing the above mentioned method is achieved.

Suitably, the interception means in the interception system is adapted to be installed in a router and/or a gateway and/or an agent apparatus. The copied information from the interception means could be sent directly to the monitoring means or to the control means, which then transmit the copied information to the monitoring means.

In one embodiment an embodiment of the interception system, the one of the at least one interception means is installed in the node, which may be a service node, a gateway, an agent apparatus or a router. Suitably the one of the at least one interception means comprises a program module stored in a first memory means associated with a first processing unit and a main part stored in a second memory means associated with a second processing unit. The interception control means may also comprise a program module stored in the first memory means associated with a first processing unit and a main part stored in the second memory means associated with the second processing unit Hereby is achieved that the interception system requires less capacity from a main CPU, which means that the main CPU may be used more effectively for other tasks, such as routing of packets and proxy server performance.

Furthermore, the present invention relates to a node in a packet-oriented network, comprising an interception control means adapted for controlling at least one interception means for intercepting packets in the network, and a first port adapted for connecting the interception control mean with a monitoring means for monitoring intercepted information. Hereby is achieved that for example a service node with the interception control means may be provided to service providers. Also, it is achieved that a monitoring means for a law enforcement agency may be connected to the node in order to get interception related information. The node may also comprise a second port for sending and receiving information from the at least one interception means.

Preferably, at least one user identity, whose communication with other user identities shall be intercepted, is stored in the interception control means in the node.

Also, one of the at least one interception means may be installed in the node and comprise a program module stored in a first memory means associated with a first processing unit and a main part stored in a second memory means associated with a second processing unit. The interception control means may also comprise a program module stored in the first memory means associated with the first processing unit and a main part stored in the second memory means associated with the second processing unit.

Moreover, the present invention relates to a monitoring means for monitoring copied information from an intercepted packet in a packet-oriented network. The monitoring means comprises a port intended for connecting the monitoring means with an interception control means for controlling at least one interception means and transmitting interception related information, such as a call identifier, user identities, addresses associated with the user identities and service information, to the monitoring means. Hereby is achieved that a monitoring means for monitoring information from a lawful interception may be provided to the law enforcement agency.

Suitably the monitoring means comprises recording means and at least one display means for recording and displaying information sent by either the interception control means or an interception means for intercepting and copying information in the packet. Hereby is achieved that law enforcement personnel is able to see directly the media transfer to and from a target and take different measures depending on what might be seen.

The monitoring means suitably comprises communication means to transmit acknowledgements or requests to the interception control means.

The present invention also relates to a router intended for a packet-oriented network. The router comprises an interception means for intercepting and copying information from a packet being transmitted in the packet-oriented network and an interception control means for controlling the interception means, the interception means comprising a program module stored in a first memory means associated with a first processing unit and a main part stored in a second memory means associated with a second processing unit and the router is adapted to be connected to at least one monitoring means for monitoring copied information from the packet, where the copied information is transmitted by the interception means directly to the monitoring means or through the interception control means. Hereby is achieved that a router with the interception means may be installed at strategic intercept positions in a packet-oriented network.

The interception control means may also comprise a program module stored in the first memory means associated with the first processing unit and a main part stored in said second memory means associated with the second processing unit.

The present invention also relates to a gateway between at least two networks of which at least one is a packet-oriented network. The gateway comprises an interception means for intercepting and copying information from a packet being transmitted in the packet-oriented network, and an interception control means for controlling the interception means. The gateway is adapted to be connected to at least one monitoring means for monitoring copied information from the packet, the copied information being transmitted by the interception means directly to the monitoring means or through the interception control means. The interception means comprise a program module stored in a first memory means associated with a first processing unit and a main part stored in a second memory means associated with a second processing unit. Hereby is achieved that a gateway with the interception means may be installed between two different networks where at least one is a packet-oriented network. The gateway is intended to be connected to at least one monitoring means for monitoring copied information from the packet, where the copied information is transmitted by the gateway directly to the monitoring means or through the interception control means. The interception control means in the gateway may comprise a program module stored in the first memory means associated with the first processing unit and a main part stored in the second memory means associated with the second processing unit.

The present invention also relates to a first embodiment of an agent apparatus in a packet-oriented local-area network. The agent apparatus comprises an interception means for intercepting and copying information from a packet being transmitted in the network, and a port adapted to connect the agent apparatus with an interception control means for controlling the interception means. The agent apparatus is also adapted to be connected to at least one monitoring means for monitoring copied information from the packet, where the copied information is transmitted by the agent apparatus directly to the monitoring means or through the interception control means. Hereby is achieved that an interception with the interception system and method could be done in a local-area network.

In addition, the invention relates to a second embodiment of an agent apparatus in a packet-oriented local-area network. The second embodiment of the agent apparatus comprises an interception means for intercepting and copying information from a packet being transmitted in the packet-oriented local-area network and an interception control means for controlling the interception means. The interception means comprises a program module stored in a first memory means associated with a first processing unit and a main part stored in a second memory means associated with a second processing unit and the agent apparatus is adapted to be connected to at least one monitoring means for monitoring copied information from the packet, where the copied information is transmitted by the interception means directly to the monitoring means or through the interception control means.

The present invention also relates to an agent computer program in a local-area network. The agent computer program comprises computer readable code means for simplifying firewall definitions and terminating communication between the local-area network and another network. The agent computer program further comprises an interception computer program comprising computer readable code means configured to cause an interception and copying of information in a packet being transmitted in the local-area network, and computer readable code means configured to allow communication between the interception computer program and an interception control computer program for controlling the interception computer program. The interception computer program comprises computer readable code means configured to cause a transmission of copied information to a monitoring means for monitoring the copied information. Alternatively the interception computer program comprises computer readable code means configured to cause a transmission of copied information to said interception control computer program. Related to this, a computer program product comprising a computer useable medium and the agent computer program, said agent computer program being recorded on the computer useable medium. Hereby is achieved that the agent computer program may be distributed to different LANs in order to improve the possibilities for an effective lawful interception.

The invention also relates to the interception computer program described above. Also provided is a computer program product, comprising a computer useable medium and the interception computer program, said interception computer program being recorded on the computer useable medium. Hereby is achieved that the interception computer program may be installed in different devices in order to provide the method and devices mentioned above. In an embodiment of the interception computer program not described in conjunction with the agent computer program, the interception computer program comprises a program module, which is adapted to be stored in a first memory means associated with a first processing unit, and a main part adapted to be stored in a second memory means associated with a second processing unit, where the program module comprises the computer readable code means configured to cause an interception and copying of information in the packet being transmitted in the communications network and the main part comprises the computer readable code means configured to allow communication between the interception computer program and the interception control computer program.

The invention also relates to an interception control computer program comprising:
computer readable code means configured to cause a controlling of an interception computer program, which intercept and copy information in a packet being transmitted in a packet-oriented network;
computer readable code means configured to enable communication between the interception control computer program and a monitoring means for monitoring copied information from the packet;
computer readable code means configured to enable communication between the interception control computer program and a node; and
computer readable code means configured to cause an order to the node or the interception computer program to prevent or terminate communication between user identities where one of the user identities is stored in the interception control computer program.
Hereby is achieved that an interception control computer program may be provided to service providers that use a packet-oriented network. Also the traffic associated with a person, whose communication in the network is to be intercepted, may be terminated in case of e.g. information comprising instructions to launch non governmental missiles.

Suitably the interception control computer program comprises a computer readable code means configured to cause a transmission of interception related information, such as a call identifier, user identities, addresses associated with the user identities and service information, to the monitoring means.

Moreover, the interception control computer program preferably comprises computer readable code means configured to enable a storage of at least one user identity, whose communication with other user identities shall be intercepted, in the intercept control computer program.

Advantageously, the interception control computer program comprises computer readable means configured to cause a positive or negative answer to an interception request from the node of whether a packet related to a user identity connected to the node shall be intercepted.

Suitably, the interception control computer program comprises computer readable means configured to cause a reception of the copied information transmitted by the interception computer program and then transmitting the copied information to the monitoring means.

The interception control computer program preferably comprises computer readable means configured to cause a stop signal, which is being transmitted to said intercept control computer program in order to stop the interception and copying of the packet. Hereby is achieved that court orders that only allow a lawful interception of a certain type of service can be followed when an intercepted service stops and the target starts to use another service. The stop signal is also used when a target logs out from the packet-oriented network.

Because of the sensitive information sent, the interception control computer program comprises computer readable means configured to cause encrypting of all information that is transmitted by the interception control computer program.

The interception control computer program may in one embodiment comprise a program module, which is adapted to be stored in a first memory means associated with a first processing unit, and a main part adapted to be stored in a second memory mean associated with a second processing unit, where said program module comprises a part of said computer readable code means and the rest of said computer readable code means is comprised in said main part.

Related to the interception control computer program, a computer program product is provided, which comprises a computer useable medium and the interception control computer program, where said interception control computer program is recorded on the computer useable medium.

### Brief Description of the Drawings

The objects, advantages and effects as well as features of the present invention will be more readily understood from the following detailed description of a preferred embodiment of the invention, as well as other embodiments, when read together with the accompanying drawings, in which:
Fig. 1 shows a schematic block diagram of a first embodiment of the invention;
Fig. 2 shows a schematic diagram of a first embodiment of a service node;
Fig. 3 shows an example of a monitoring means according to the invention;
Fig. 4 shows a schematic diagram of an embodiment of a router;
Fig. 5 shows a schematic diagram of an embodiment of a gateway;
Fig. 6 shows a schematic diagram of an embodiment of an agent apparatus;
Fig. 7 shows a flow diagram of a set-up of a lawful interception when a target is calling;

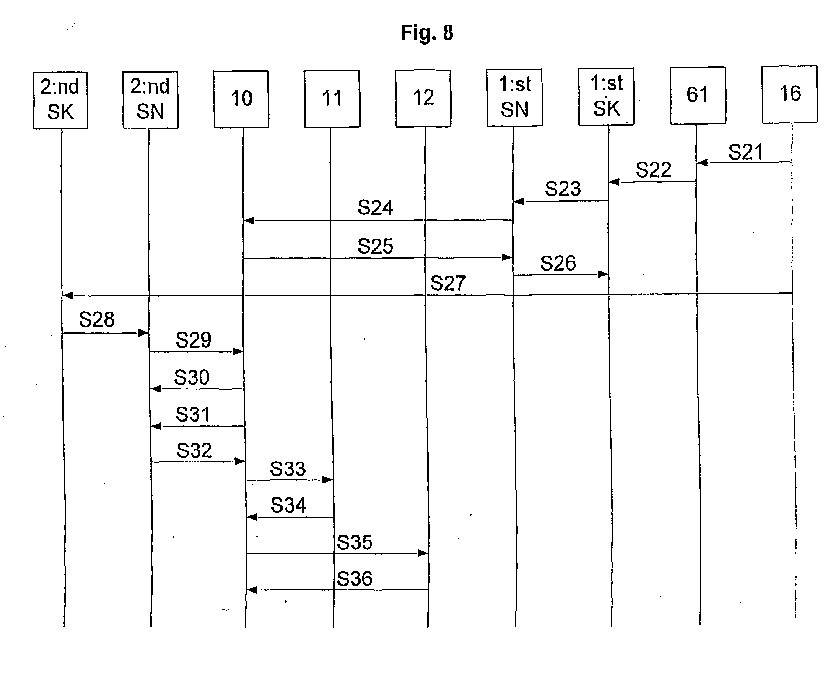

Fig. 8 shows a flow diagram of a set-up of the lawful interception when a user is calling the target; and
Fig. 9 shows a second embodiment of a node according to the invention.

### Detailed Description of Embodiments

While the invention covers various modifications and alternative methods and systems, suitable embodiments of the invention are shown in the drawings and will hereinafter be described in detail. It is to be understood, however, that the specific description and drawings are not intended to limit the invention to the specific form disclosed. On the contrary, it is intended that the scope of the claimed invention includes all modifications and alternative constructions thereof falling within the scope of the invention as expressed in the appended claims to the full range of their equivalents.

After a court order to a law enforcement agency (LEA) to conduct lawful interception associated with, for example, a person, also called a target. The LEA then gives the lawful authorisation to a service provider, such as an internet service provider. The service provider determines the relevant target identities from the information given by the LEA and prepares interception devices for the lawful interception.

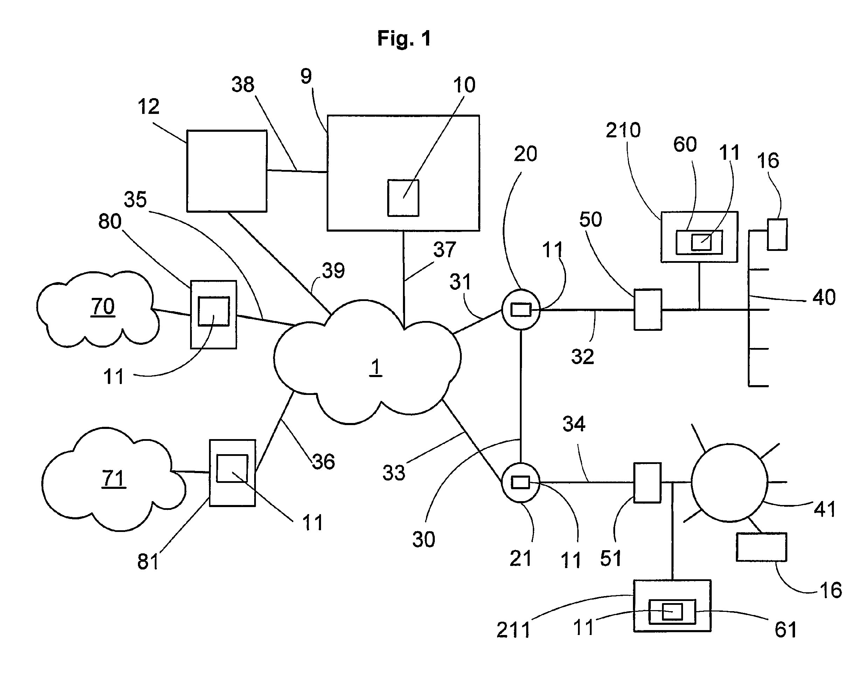

Fig. 1 shows a block diagram giving an overall view of a preferred embodiment. A packet-oriented network 1, such as an Internet Protocol backbone with routers, is mainly shown only as a cloud-shaped block for the ease of understanding. Here only a first and a second router 20 and 21 are seen connected to the rest of the packet-oriented network 1, but of course more routers connected to the packet-oriented network 1 could have been shown. A first, second and third link, 30, 31 and 32, are connected to the first router 20 and the first link 30, a fourth and a fifth link, 33 and 34, are connected to the second router 21, but of course there could be any number of links to the routers 20, 21. The first router 20 is connected to a first local-area network (LAN) 40 , such as an Ethernet based network, and the second router is connected to a second LAN 41, for example a token ring network. A first firewall 50 associated with the first LAN 40 is installed between the first LAN 40 and the first router 20 in order to prevent unauthorised access to or from the first LAN 40. For the same purpose, a second firewall 51 associated with the second LAN 41 is installed between the second LAN 41 and the second router 21. In the first LAN 40, a first agent 60 works like a proxy server that is used as a part of the LAN 40 to simplify firewall definitions and to terminate transport layer communication between untrustworthy outside networks and the LAN 40 protected by the firewall 50. The first agent 60 is installed in a first agent apparatus 210, i.e. a proxy server hardware. In the same way, LAN 41 has a similar second agent 61, which is installed in a second agent apparatus 211. Any device, such as workstations, personal computers, and cameras, known to be connectable to a LAN may of course be connected to each one of the first LAN 40 and the second LAN 41. Here only one such device in each LAN is shown, represented by blocks 16.

Also shown in fig. 1 are a first telephone network 70 and a second telephone network 71, such as public switched telephone networks (PSTN) or public land mobile networks (PLMN). A first gateway 80, in the form of a voice gateway that interfaces and translates, is installed between the packet-oriented network 1 and the first telephone network 70 in order to transmit signals from for example a PSTN to another PSTN through the packet-oriented network 1, i.e. using an IP-telephone system. A sixth link 35 connects the packet-oriented network 1 to the first gateway 80. In a similar way, the second telephone network 71 are connected to the packet-oriented network 1 through a seventh link 36 and a second gateway 81.

A service node (SN) 9 is connected to the packet-oriented network 1 by an eighth link 37. In case of, for example, an IP-telephone system, the SN 9 comprises: a user agent (UA), a service agent (SA), a sitekeeper (SK) and an application programming interface to higher layer applications such as voice mail, e-mail convergence and web-initiated dialling, or vertical applications such as sales support, customer care systems, and order and logistics systems. The SK controls access agents, i.e. gateways and agents as the first agent 60 and the second agent 61, for a site. Incoming traffic from an originating access agent is routed by the SK towards the destination. The traffic is addressed towards any of the access agents in the terminating site that supports the dialled number. The UA is responsible for user oriented call services and handles user authentication, authorisation, accounting and SA invocation. A user of an IP-telephone system is assigned to a UA that is used each time the user makes a call in the IP-telephone system regardless of the user location in the network. The SA is responsible for supplementary services and communicates with the UA. Also, the SA provides a service creation environment (SCE) which is a high level abstraction application program interface (API) that allows easy service development. The SCE may be used to implement the interception devices. In the ITU-T standard, known to a person skilled in the art, the SA, UA and SK are comprised in the so-called gatekeeper.

The interception devices comprise an interception control means (ICM) 10, interception means (IM) 11 and a monitoring means (MM) 12. In the preferred embodiment of the invention, the ICM 10 is an interception control computer program product - a logical function with preferably all the logic to perform the lawful interception and control the IM 11, which preferably also is a logical function. Preferably, the ICM 10 is installed in the SN 9, but may be positioned in any other place in the packet-oriented network 1. In the SN 9, the ICM 10 is preferably attached to the SA since all service related information is stored there and since the SA has an interface towards the UA for retrieving user specific information. There may be several IMs 11 distributed in the packet-oriented network 1 as an installed part of a router, such as the routers 20 and 21. Alternatively, or in addition, the IM 11 may also be implemented in gateways, such as the first and the second gateways 80 and 81 and/or in agents such as the first agent 60 and the second agent 61. The distribution and the number of the IMs 11 are a strategic matter since the media stream that is to be intercepted must pass at least one IM 11 and a target must not understand that his/her communication is delayed because it has to be transmitted a long and/or slow way to an IM. It is also possible to install IMs in endpoints, such as terminals, but a skilled user would then easily know that he/she is being intercepted. The ICM 10 keeps track of the IM 11 and may direct copied content information (CI) sent by a user to the nearest MM 12. The CI is the media stream, e.g. speech or data, that is intended to be sent to one user from another user. When the interception is going to be performed the ICM 10 orders the IM 11 to start the interception, duplicate the intercepted media stream and transmit the duplicated media stream to the MM 12, either directly without passing the ICM 10 or by first passing the ICM 10. The ICM 10 also stops the interception and handles the communication with other means. Information about users that are targets for the interception may be stored in the ICM 10. Also, it is possible to intercept several calls, file transfers etc. at the same time and the ICM 10 controls every interception being in progress. Furthermore, the ICM 10 collects and forwards interception related information (IRI) about the intercepted target to the MM 12. The IRI for the communication is associated with the services that the target utilises and may comprise e.g. the user identities that have successfully or unsuccessfully attempted to communicate with the target; the user identities that the target have successfully or unsuccessfully attempted to communicate with; details of services used and their associated parameter; and time-stamps for identifying the beginning, end and duration of the connection. Although only one ICM 10 is shown in fig. 1, there may be several ICMs connected to the packet-oriented network 1, preferably in one SN each, where the SNs may be owned by different service providers.

The MM 12 is provided by the LEA and collects and displays all the IRI and copied CI that the ICM 10 transmits through an ninth link 38 or one of the IMs 12 transmits through a tenth link 39 without passing the ICM 10. The communication between the MM12 and the ICM 10 may be a two-way communication, whereas the communication through the tenth link 39 only is from the IMs 11 to the MM 12. The reason for this is that all the control means for the lawful interception is in the ICM 10. There may of course be more than one MM 12, as it may be appropriate to have MMs geographically distributed in order to provide proper availability to the intercepted information for the law enforcement personnel.

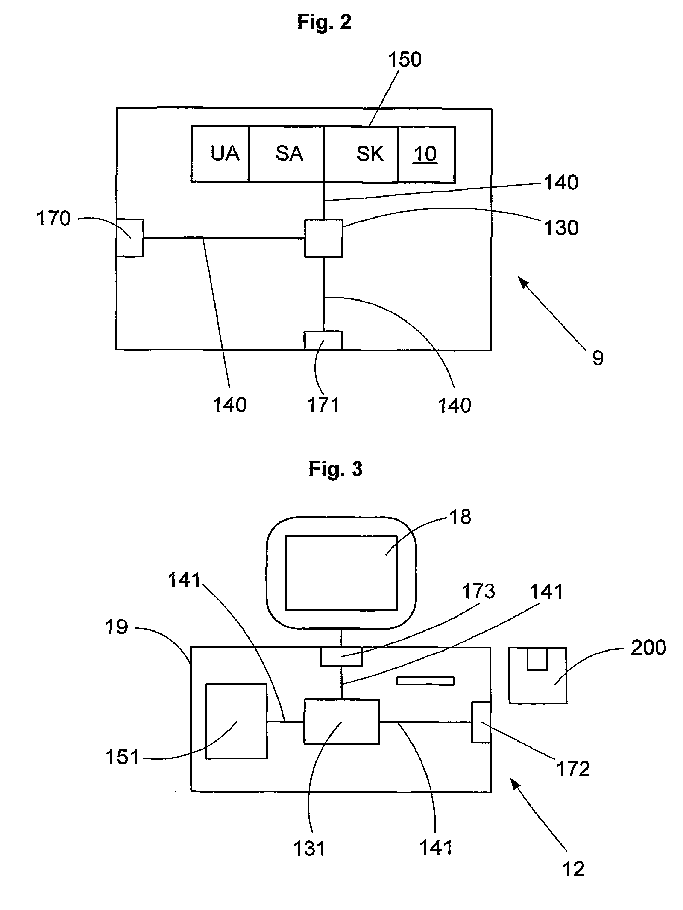

Fig. 2 shows a schematic view of the SN 9, which comprises a central processing unit (CPU) 130, buses 140, a memory means 150, a first port 170 for connecting the SN 9 with the monitoring means 12, and a second port 171 for the eighth link 37. The CPU 130 processes all the tasks of the SN 9 with the help of the buses 140 and the memory means 150, which comprises the UA, SK, SA, and ICM 10. The memory means may be e.g. a hard disk, a read-only memory a flash memory or the like.

Fig. 3 shows an example of the MM 12. Here the MM 12 comprises a computer terminal with a display means 18 in the form of a display screen and a box 19. The box 19 comprises buses 141, a recording means in the form of a hard disk drive 151, a communication means in the form of a CPU 131, a port 172 intended for connecting the monitoring means 12 with the SN 9, and a port 173 for communication with the display means 18. Also shown is a computer useable medium in the form of a floppy disk 200.

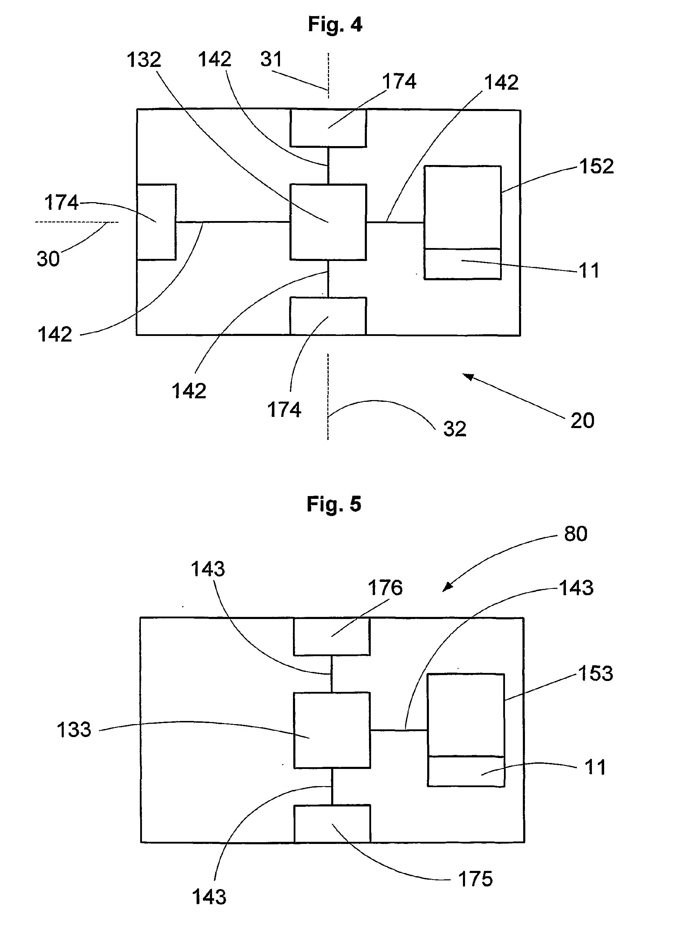

Fig. 4 shows a schematic diagram of a router according to the invention. Here the router is exemplified by the first router 20, which comprises a CPU 132, a memory means 152, ports 174 for connection with the first, second and third link 30,31, and 32, and buses 142 enabling communication between the memory means 152, the ports 174 and the CPU 132. The memory means 152 comprises the IM 11.

Fig. 5 shows a schematic diagram of a gateway according to the invention. Here the gateway is exemplified by the first gateway 80, which comprises a CPU 133, a memory means 153, a first port 175 for connecting the gateway 80 to the first telephone network 70, a second port 176 and buses 143. The buses enable communication between the memory means 153, the CPU 133, the first port 175 and the second port 176. The second port 176 is intended for connecting the gateway to the packet-oriented network 1 and the ICCM 10 in the SN 9. The memory means 153 comprises the IM 11. It should be noted that this configuration is also applicable to any other so-called boarder element between two networks where one is a packet-oriented network.

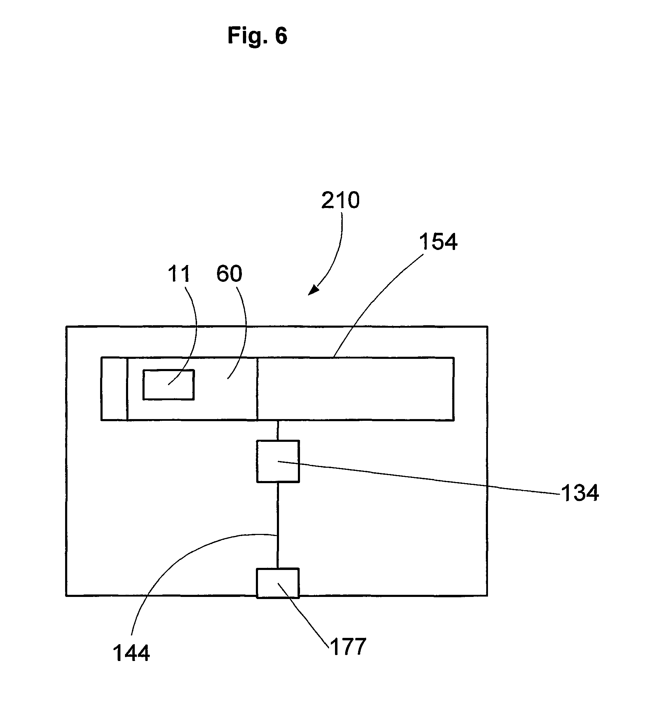

Fig. 6 shows a schematic diagram of an agent apparatus, a proxy server apparatus etc. according to the invention. Here the agent apparatus is exemplified by the first agent apparatus 210, which comprises a CPU 134 for communication and execution of the agent 60, a memory means 154, a port 177 for connecting the agent apparatus with the rest of the LAN 40, and buses 144. The buses enable communication between the memory means 154, the CPU 134 and the port 177. The memory means 154 comprises the agent 60, which comprises the IM 11.

Now six communication examples using a packet-oriented network will be described. Each one of them may be intercepted by the above described interception devices.

The first example is a call from a user in either the first telephone network 70 or the second telephone network 71 to a user in a IP-telephone system in either the first LAN 40 or the second LAN 41. If the call is done from the first telephone network 70 to the first LAN 40, the media stream will go through the first gateway 80, the sixth link 35, the second link 31, the router 20, the third link 32 and the firewall 50 and then maybe treated by the first agent 60 before it reaches the receiving user in the first LAN 40. The interception point for the IM 11 is here preferably in the first gateway 80 or in the first agent 60.

The second example is a call from a user in a IP-telephone system, in for example the first LAN 40 or the second LAN 41, to a user in another system, such as one of the first telephone system 70 or the second telephone system 71 using a PSTN or PLMN system. If the call is done from the second LAN 41 to the second telephone network 71, the media stream will pass through the second agent 61, the second firewall 51, the fifth link 34, the fourth link 33, the seventh link 36, the second gateway 81 before it reaches the receiving user in the second telephone network 71. The interception point for the IM 11 is here preferably in the second agent 61 or in the second gateway 81.

The third example is a call from a user in a telephone system to another user in another telephone system, where the systems themselves are not IP-telephone systems, but which are connected to each other by a packet-oriented network. If a call is done from the first telephone system 70 to the second telephone system 71, the media stream will pass through the first gateway 80, the sixth link 35, the packet-oriented network 1, the seventh link 36, the second gateway 81 before it reaches the receiving user in the second telephone network 71. The interception point for the IM 11 is here preferably in the first gateway 80 or in the second gateway 81.

The fourth example is for example a call, an e-mail, a file transfer or a video conference data transfer from a user in a segment in a packet-oriented network to a user in another segment of the packet oriented network. For example an IP-telephone call from the first LAN 40 to the second LAN 41 leads the media stream through the first agent 60, the first firewall 50, the third link 33, the first router 20, the first link 30 or the second link 31 and the fourth link 33, the second router 21, the fifth link 34, the second firewall 51 and the second agent 61 in the second LAN 41. The interception point for the IM 11 is here preferably in the first agent 60 or in the second agent 61.

The fifth example is for example a call, an e-mail, a file transfer or a video conference data transfer from a user in a segment of a packet-oriented network to a user in the same segment of the packet-oriented network. An example is a LAN, such as the first LAN 40, supporting IP-telephony, where a user in that LAN calls another user in the same LAN. The interception point for the IM 11 in the first LAN 40 is preferably in the first agent 60, which the media stream has to pass. Of course the interception point for the IM 11 might be in one of the end points, but as said before, a skilled user will then easily know that he/she is intercepted.

The sixth example is multipart communication, e.g. a multipart speech service or a multipart video conference service provided by a service provider to users in different networks or different segments of a network. A conversation between a user in the first LAN 40, a user in the second LAN 41, a user in the first telephone network 70 and a user in the second telephone network 71 may be intercepted in the first gateway 80, the second gateway 81, the first agent 60 or the second agent 61.

Another example of placing the IM 11 is in a node somewhere in the packet-oriented network, preferably a centrally placed node, and directing all traffic that is to be intercepted through the IM 11 in that node. This allows for interception in all five of the above mentioned communication examples, but may generate unacceptable medial stream delays.

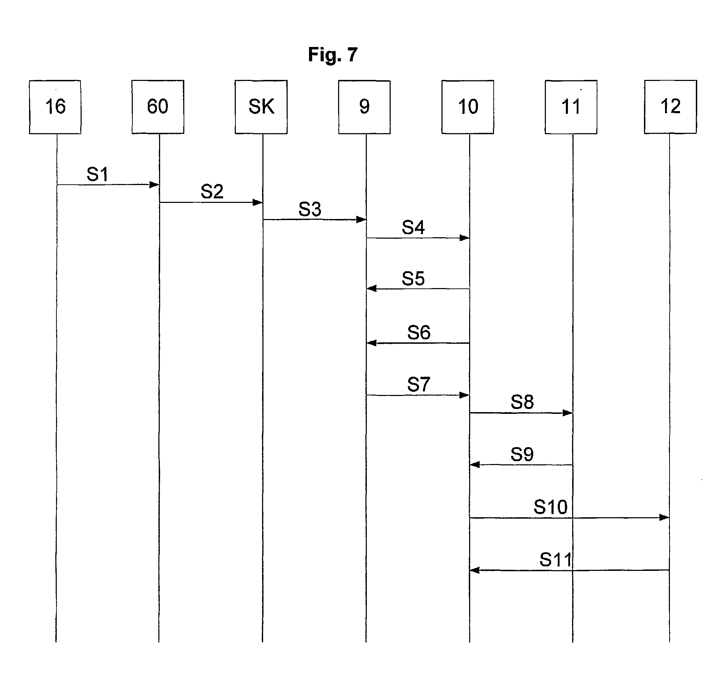

An example of the interaction between different nodes and the interception devices during the set-up when the target makes a call, will now be described with the help from Fig. 7. First there is an installation of the MM12 as a node, installation of the ICM 12 in the SN 9 and installation of at least one IM 11 in for example a router, a gateway or an agent means that works like a proxy server. Then the ICM 12 gets information of a user identity, which is stored as "active" in the ICF. The user identity may be e.g. a telephone number, an e-mail address, a website address, an IP-address, an International Mobile Equipment Identifier (IMEI) or International Mobile Station Identity (IMSI). In Fig. 6, the target calls from device 16 in the first LAN 40 and there are eleven principal steps S1-S11, where S1 is the first step and the other follow after each other in sequence according to their number.

Step S1: The target makes a service request from the device 16, e.g. a telephone, a fax machine or a computer. A set-up signal goes from the device 16 to the first agent 60.

Step S2: The first agent 60 routes the call to its SK.

Step S3 : The SK routes the call to the SN 9 of the target.

Step S4: The SN 9 makes an interception request to the ICM 10 to find out if the interception shall be performed.

Step S5: The ICM 10 finds out that the user is a target and responds with a positive answer. The positive answer is triggered by the user identity.

Step S6: The ICM 10 sends the address of the IMs 11 to the SN, as well as giving orders to initiate the services requested by the target. Alternatively the ICM 10 could deny the request of the target if it for some reason is a court order for that.

Step S7: The SN sends back an acknowledgement to the ICM 10.

Step S8: The ICM 10 sends information about an interception to a suitable IM 11. The information comprises the addresses of the communicating users and the address to a suitable MM 12.

Step S9: The IM 11 sends an acknowledgement back to the ICM 10.

Step S 10: The ICM 10 sends IRI to the MM 12 that there will be an interception and that the MM 12 should be prepared to receive copied intercepted CI either from the IM 11 or from the ICM 10. The IRI will contain e.g. call identifier, address of the non calling user/users and the target, and service information.

Step S11: The MM 12 sends an acknowledgement back to the ICM 10. Thereafter the IM 11 starts to copy the CI and sends it to the MM12 or the ICM 10.

If a user calls the target there is another procedure after the installation of the interception devices and the activation of a target. In Fig. 7, a user calls the target in for example the first LAN 40 from a device 16 in the second LAN 41. Here there are sixteen principal steps S21-S36 to set-up the lawful interception, where S21 is the first step and the other follow after each other in sequence according to their number.

Step S21: The user makes a call from his device 16. A set-up signal goes from the terminal to the second agent 61.

Step S22: The second agent 61 routes the call to its SK, here called the first SK.

Step S23: The first SK sends information about the calling user identity to the belonging SN, here called the first SN.

Step S24: The first SN makes an interception request to the ICM 10 to fmd out if an interception shall be performed.

Step S25 : The answer of the ICM 10 is negative and the answer is sent back to the first SN.

Step S26: The answer is forwarded to the first SK.

Step S27: The originating side, here device 16, sends a set-up signal comprising the calling user identity and the target user identity to a second SK associated with the target.

Step S28: The second SK sends a set-up signal to a second SN associated with the second SK. If the user and the target belong to the same SN, the second SN is of course the same as the first SN.

Step S29: The second SN makes an interception request to a second ICM belonging to the second SN.

Step S30: The second ICM finds out that the receiver of the call is a target and responds with a positive answer. Information about the address of a suitable IM 11 is sent to the second SN.

Step S31: The second ICM orders an initiation of the requested service of the user in LAN 41. Alternatively, the second ICM could deny communication with the target if it is a court order for that.

Step S32: The second SN sends back an acknowledgement.

Step S33: The second ICM sends information about an interception to a suitable IM 11. The information comprises the addresses of the communicating users and the address to a suitable IM 11.

Step S34: The IM 11 sends an acknowledgement to the second ICM.

Step S35: The second ICM sends IRI to the MM 12 that there will be an interception and that the MM 12 should be prepared to receive copied intercepted CI either from the IM 11 or from the second ICM. The IRI shall contain e.g. call identifier, address of the calling user and the target, and service information.

Step S36: The MM 12 sends an acknowledgement back to the second ICM and the IM 11 starts to copy the CI and sends it to the MM 12 or the second ICM.

When the communication has ended or when the controlling ICM decides to break the lawful interception, the ICM sends a last message with IRI to the MM, which sends an acknowledge back to the ICM, which thereafter ends the communication with the MM. The ICM also orders the active IM to stop intercepting possible CI and stop transmitting copied CI to the ICM or the MM. Thereafter the communication between the ICM and the active IM is ended.

Since the communication between the ICM 10, the IMs 11 and the MM 12 is secret, any communication between them may be encrypted such that no unauthorised person should be able to understand the copied CI or the IRI. To understand the encrypted information at least the MM 12 must comprise a means for reverse the encrypted information back to the original information.

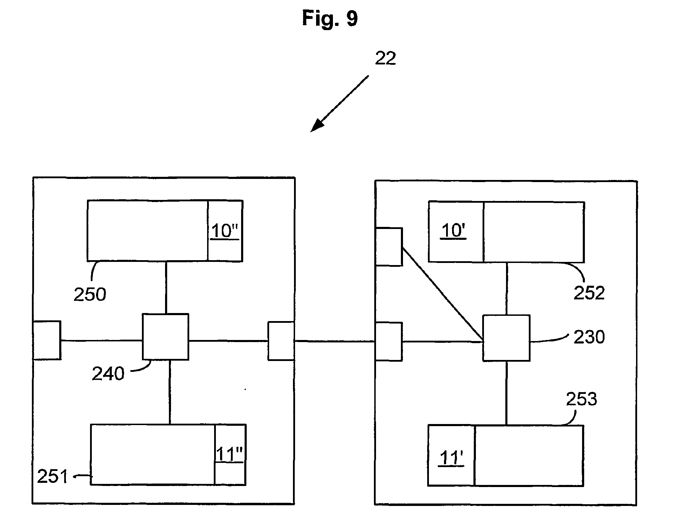

The processing associated with lawful interception has been tested in some systems and measurements of the amount of the processing power allocated for the lawful interception, including the determining of whether an interception shall be performed, have shown that up to a quarter of the processing capacity may have to be allocated for processing associated with the interception although an interception currently is not being performed. This makes the processing capacity less for other tasks such as routing packets. The routing of packets may thus be slower than it would be without the interception feature. Fig. 9 shows a second embodiment of at least a part of a node 22 in the packet-oriented network 1, although explicitly not shown in Fig. 1. The node may be a router, a gateway, an agent apparatus or a service node of the same principal features as disclosed earlier in the description. However, in this embodiment the node comprises both the ICM 10 and the IM 11. In order to increase the capacity of the node for its main tasks, such as routing packets in the case where the node is a router, both the ICM 10 and the IM 11 comprise two separate parts comprised in different memory means, e.g. hard disks, read-only memories or flash memories. Compared to the previous embodiments of the different nodes, this embodiment comprises at least one additional, second processing unit 230, which main purpose is to process most of the traffic related to the lawful interception. Hence, a first processing unit 240, which mainly handles the main traffic to and from the node, such as the CPU:s 130-134, is supervised by the second processing unit 230 such that the interception requires less processing by the first processing unit 240. Suitably, as little as necessary of the ICM 10 and the IM 11 respectively is stored in first memory means 250 and 251 respectively and is processed by the first processing unit 240; the rest of the ICM 10 and the IM 11 is stored in second memory means 252 and 253 respectively, said second memory means 252 and 253 being connected to the second processing unit 230. The second processing unit 230 is in this embodiment positioned on a different printed circuit card, which may be comprised in the same unit as the first processing unit 240 or comprised in an additional server unit, which also is comprised in the node. In other words, each one of the ICM 10 and the IM 11 may comprise a main part, 10' and 11' respectively, being processed by the second processing unit 230 and a smaller program module, 10" and 11" respectively, which is processed by the main processing unit 240. The smaller program module 11" of the IM 11 may substantially only comprise code means for a packet sniffer function and for communication with the main part 11' of the IM 11, whereas the main part 11'of the IM 11 comprises the code means for e.g. starting and stopping the interception upon request from the ICM 10 and forwarding copied information to the main part 10' of the ICM 10' or the MM 12. The packet sniffer function is the part of the IM 11 that monitors data travelling over the node 22 and copies selected packets. Although the main part of the ICM and IM in this embodiment is stored in different second memory means, 252 and 253 respectively, it shall be understood that they may be stored in the same memory means, such as the second memory means 252. However, it is important to notice that the ICM 10 and the IM 11 suitably always are logically separated from each other.

## Claims

1. A method for interception of packets in a packet-oriented network (1), comprising the steps of:
activating an interception control means (10) for controlling at least one interception means (11) for intercepting and copying information from a packet being transmitted in said network (1);
initiating communication between said interception control means (10) and at least one monitoring means (12) for monitoring copied information from said packet;
establishing a connection between said interception control means (10) and at least one of said at least one interception means (11);
**characterized by**
transmitting interception related information, such as a call identifier, user identities, addresses associated with said user identities and service information, from the interception control means (10) to the monitoring means (12) for preparing the monitoring means (12) to receive the copied information;
ordering said interception means (11) to copy said information to said at least one monitoring means (12) by transmitting a signal from said interception control means (10); and
said interception means (11) transmitting said copied information to said at least one monitoring means (12).

2. A method according to claim 1, comprising the steps of:
providing information about a user identity to said interception control means (10), which analyses said user identity to determine if a packet related to said user identity is to be intercepted.

3. A method according to claim 1 or 2, comprising the step of identifying the type of said packet.

4. A method according to claim 3, where said identification of the type of said packet is done by at least one of said interception control means (10), said at least one interception means (11) and said at least one monitoring means (12).

5. A method according to anyone of the preceding claims, comprising the step of installing said at least one interception means (11) in a router (20,21,22) in said network (1), in an agent apparatus (210,211,22) for simplifying firewall definitions and terminating communication between a local-area network (40,41) and another network, or in a gateway (80,81,22).

6. A method according to anyone of the preceding claims, comprising the step of encrypting said copied information before it is transmitted to said at least one monitoring means (12) or said interception control means (10).

7. A method according to anyone of the preceding claims, comprising the step of encrypting any interception related information, e. g. being transmitted between said interception control means (10) and said at least one monitoring means (12).

8. A method according to anyone of the preceding claims, where said interception related information comprises time data for identifying the beginning, end and duration of a connection between two user identities.

9. A method according to anyone of the preceding claims, comprising the step of storing at least one user identity, whose communication with other user identities shall be intercepted, in said interception control means (10).

10. A method according to anyone of the preceding claims, comprising the step of transmitting information about the addresses of communicating user identities, whose communication is to be intercepted, and the address of said at least one monitoring means (12) from said interception control means (10) to said at least one of said at least one interception means (11).

11. An interception system for intercepting packets in a packet-oriented network (1), comprising at least one interception means (11) for intercepting and copying information from a packet being transmitted in said network (1), an interception control means (10) installation in a node (9, 22) in said network (1) for controlling said at least one interception means (11), and at least one monitoring means (12) for monitoring copied information being transmitted from said at least one interception means (11) and communicating with said interception control means (10),
**characterized in that**
the interception control means (10) is adapted for transmitting a signal to said interception means (11) for ordering said interception means (11) to copy said information to said at least one monitoring means (12), and for transmitting interception related information, such as a call identifier, user identities, addresses associated with said user identities and service information, to the monitoring means (12) for preparing the monitoring means (12) to receive said information from the interception means (11).

12. An interception system according to claim 11, where one of said at least one interception means (11) is adapted to be installed in a router (20, 21, 22).

13. An interception system according to claim 11 or 12, where one said at least one interception means (11) is adapted to be installed in a gateway (80, 81, 22).

14. An interception system according to anyone of the claims 11-13, where one of said at least one interception means (11) is adapted to be installed in an agent apparatus (210, 211, 22).

15. An interception system according to anyone of the claims 11-14, where said copied information first is transmitted from said interception means (11) to said interception control means (10), which then transmits said copied information to said monitoring means (12).

16. An interception system according to claim 11, where said node (22) is a gateway, an agent apparatus or a router, and one of said at least one interception means (11) is installed in said node (22).

17. An interception system according to claim 16, where said one of said at least one interception means (11) comprises a program module (11") stored in a first memory means (250,251) associated with a first processing unit (240) and a main part (11') stored in a second memory mean (252,253) associated with a second processing unit (230).

18. An interception system according to claim 16, where said interception control means (10) comprises a program module (10") stored in a first memory means (250, 251) associated with a first processing unit (240) and a main part (10') stored in a second memory mean (252,253) associated with a second processing unit (230).

19. A node (9, 22) in a packet-oriented network (1), comprising an interception control means (10) adapted for controlling at least one interception means (11) for intercepting and copying information from a packet being transmitted in said network (1), and a first port (170) adapted for connecting said interception control means (10) with a monitoring means (12) for monitoring intercepted information, **characterized in that**
a second port (171) is comprised for connecting said interception control means (10) with said interception means (11) and adapted for transmitting a signal for ordering said interception means (11) to copy said information to said monitoring means (12), and
wherein the first port (170) is adapted for transmitting interception related information, such as a call identifier, user identities, addresses associated with said user identities and service information, to the monitoring means (12) for preparing the monitoring means (12) to receive said information.

20. A node (9,22) according to claim 19, where at least one user identity, whose communication with other user identities shall be intercepted, is stored in said interception control means (10).

21. A node (9,22) according to claim 19 or 20, comprising a second port (171) for sending and receiving information from said at least one interception means (11).

22. A node (22) according to anyone of the claims 19-21, where one of said at least one interception means (11) is installed in said node (22).

23. A node (22) according to claim 22, where said one of said at least one interception means (11) comprises a program module (11") stored in a first memory means (250,251) associated with a first processing unit (240) and a main part (11') stored in a second memory mean (252,253) associated with a second processing unit (230).

24. A node (22) according to claim 22, where said interception control means (10) comprises a program module (10") stored in a first memory means (250,251) associated with a first processing unit (240) and a main part (10') stored in a second memory mean (252,253) associated with a second processing unit (230).

25. A monitoring means (12) for monitoring copied information from an intercepted packet in a packet-oriented network (1), comprising a port (172) for connecting said monitoring means (12) with an interception control means (10) for controlling at least one interception means (11); **characterized in that**
the monitoring means is adapted for receiving interception related information, such as a call identifier, user identities, addresses associated with said user identities and service information, from said interception control means (12), for preparing the monitoring means (12) to receive the copied information from said at least one interception means (11).

26. A monitoring means (12) according to claim 25, comprising recording means (131) and at least one display means (18) for recording and displaying information sent by either said interception control means (10) or an interception means (11) for intercepting and copying information in said packet.

27. A monitoring means (12) according to claim 25 or 26, comprising communication means (131) to transmit acknowledgements or orders to said interception control means (10).

28. An agent apparatus (210, 311, 22) in a packet-oriented local-area network (40, 41), comprising an interception means (11) for intercepting and copying information from a packet being transmitted in said packet-oriented local-area network (40, 41) and a port (177) adapted to connect said agent apparatus (210, 311, 22) with an interception control means (10) for controlling said interception means (11),
**characterized in that**
the agent apparatus is adapted for receiving a signal from said interception control means (10) being ordered to copy said information to at least one monitoring means (12), and for transmitting said information to said monitoring means (12).

29. An agent apparatus (210,211) according to claim 28, where said agent apparatus (210,211) is adapted to be connected to at least one monitoring means (12) for monitoring copied information from said packet, where said copied information is transmitted by said agent apparatus (210,211) directly to said monitoring means (12) or through said interception control means (12).

30. An agent apparatus (22) according to claim 28, wherein said interception means (11) comprises a program module (11") stored in a first memory means (250,251) associated with a first processing unit (240) and a main part (11') stored in a second memory means (252,253) associated with a second processing unit (230) and said agent apparatus (22) being adapted to be connected to at least one monitoring means (12) for monitoring copied information from said packet, where said copied information is transmitted by said interception means (11) directly to said monitoring means (12).

31. An agent apparatus (22) according to claim 30, where said interception control means (10) comprises a program module (10") stored in said first memory means (250, 251) associated with said first processing unit (240) and a main part (10') stored in said second memory mean (252,253) associated with said second processing unit (230).

32. An interception computer program (11) comprising:
computer readable code means configured to cause an interception and copying of information in a packet being transmitted in a communications network (40, 41);
computer readable code means configured to allow communication between said interception computer program (11) and an interception control computer program (10) for controlling said interception computer program (11); and to cause a transmission of copied information to a monitoring means (12) for monitoring said copied information;
**characterized in that**
the computer readable code means is configured to receive a signal for ordering said interception means (11) to copy said information to said monitoring means (12), and to cause a direct transmission of the copied information to said monitoring means (12).

33. An interception computer program (11) according to claim 32, comprising computer readable code means configured to cause a transmission of copied information to said interception control computer program (10).

34. An interception computer program according to claim 32, comprising a program module (11"), which is adapted to be stored in a first memory means (250, 251) associated with a first processing unit (240), and a main part (11') adapted to be stored in a second memory means (252,253) associated with a second processing unit (230), where said program module (11") comprises said computer readable code means configured to cause an interception and copying of information in said packet being transmitted in said communications network (40,41) and said main part (11') comprises said computer readable code means configured to allow communication between said interception computer program (11) and said interception control computer program (10).

35. A computer program product, comprising a computer usable medium (152,153,154, 200) and an interception computer program (11) according to claim 32, said interception computer program (11) being recorded on said computer usable medium (152,153,154,200).

36. An agent computer program (60,61) being installed in an agent apparatus (210, 211) of a local-area network (40, 41), comprising computer readable code means for simplifying firewall definitions and terminating communication between said local-area network (40, 41) and another network, said agent computer program (60,61) further comprises an interception computer program (11) according to claim 32, or to claims 32 and 33, or to claims 32, 33 and 35.

37. An interception control computer program (10) comprising:
computer readable code means configured to cause an controlling of at least one interception computer program (11), which intercept and copy information in a packet being transmitted in a packet oriented network (1);
computer readable code means configured to enable communication between said interception control computer program (10) and a monitoring means (12) for monitoring copied information from said packet;
computer readable code means configured to enable communication between said interception control computer program (10) and a node (9, 22),
**characterized in that**
the computer readable code means is configured to transmit interception related information, such as a call identifier, user identities, addresses associated with said user identities and service information, from the interception control computer program (10) to the monitoring means (12) for preparing the monitoring means (12) to receive the copied information, and to order said interception means (11) to copy said information to said at least one monitoring means (12) by transmitting a signal from said interception control means (10).

38. An interception control computer program (10) according to claim 37, comprising a computer readable code means configured to cause a transmission of interception related information, such as a call identifier, user identities, addresses associated with said user identities and service information, to said monitoring means (12).

39. An interception control computer program (10) according to anyone of the claims 37 - 38, comprising a computer readable code means configured to enable a storage of at least one user identity, whose communication with other user identities shall be intercepted in said interception control computer program (10).

40. An interception control computer program (10) according to claim 37, comprising computer readable code means configured to cause a positive or negative answer to an interception request from said node (9) of whether a packet related to a user identity connected to said node (9) shall be intercepted.

41. An interception control computer program (10) according to anyone of the claims 37 - 40, comprising computer readable code means configured to cause a reception of said copied information transmitted by said interception computer program (11) and then transmitting said copied information to said monitoring means (12).

42. An interception control computer program (10) according to anyone of the claims 37 - 41, comprising computer readable code means configured to cause a stop signal, which is being transmitted to said interception computer program (11) in order to stop the interception and copying of said packet.

43. An interception control computer program (10) according to anyone of the claims 37 - 42, comprising computer readable code means configured to cause encrypting of all information that is transmitted by said interception control computer program (10).

44. An interception control computer program (10) according to anyone of the claims 37 - 43, comprising a program module (10"), which is adapted to be stored in a first memory means (250,251) associated with a first processing unit (240), and a main part (10') adapted to be stored in a second memory means (252,253) associated with a second processing unit (230), where said program module (10") comprises a part of said computer readable code means and the rest of said computer readable code means is comprised in said main part (10').

45. A computer program product comprising a computer useable medium (150,200) and an interception control computer program (10) according to claim 37, said interception control computer program (10) being recorded on said computer useable medium (150, 200).

## Patentansprüche

1. Verfahren zum Abhören von Paketen in einem paketorientierten Netz (1), umfassend die folgenden Schritte:
Aktivieren eines Abhörsteuerungsmittels (10) zum Steuern wenigstens eines Abhörmittels (11) zum Abhören und Kopieren von Informationen aus einem Paket, das im Netz (1) übertragen wird;
Einleiten einer Kommunikation zwischen dem Abhörsteuerungsmittel (10) und wenigstens einem Überwachungsmittel (12) zum Überwachen von kopierten Informationen aus dem Paket;
Herstellen einer Verbindung zwischen dem Abhörsteuerungsmittel (10) und wenigstens einem des wenigstens einen Abhörmittels (11);
**gekennzeichnet durch**
Übertragen von abhörbezogenen Informationen, wie beispielsweise einer Rufkennung, Benutzeridentitäten, den Benutzeridentitäten zugeordneten Adressen und Dienstinformationen, vom Abhörsteuerungsmittel (10) an das Überwachungsmittel (12), um das Überwachungsmittel (12) zum Empfangen der kopierten Informationen vorzubereiten;
Anweisen des Abhörmittels (11), die Informationen in das wenigstens eine Überwachungsmittel (12) zu kopieren, **durch** Übertragen eines Signals vom Abhörsteuerungsmittel (10); und
wobei das Abhörmittel (11) die kopierten Informationen an das wenigstens eine Überwachungsmittel (12) überträgt.

2. Verfahren nach Anspruch 1, umfassend den folgenden Schritt:
Liefern von Informationen über eine Benutzeridentität an das Abhörsteuerungsmittel (10), welches die Benutzeridentität analysiert, um zu bestimmen, ob ein mit der Benutzeridentität in Beziehung stehendes Paket abgehört werden soll.

3. Verfahren nach Anspruch 1 oder 2, umfassend den Schritt des Identifizierens des Typs des Pakets.

4. Verfahren nach Anspruch 3, wobei die Identifizierung des Typs des Pakets durch wenigstens eines des Abhörsteuerungsmittels (10), des wenigstens einen Abhörmittels (11) und des wenigstens einen Überwachungsmittels (12) erfolgt.

5. Verfahren nach einem der vorhergehenden Ansprüche, umfassend den Schritt des Installierens des wenigstens einen Abhörmittels (11) in einem Router (20, 21, 22) im Netz (1), in einer Agentenvorrichtung (210, 211, 22) zum Vereinfachen von Firewall-Definitionen und Beenden der Kommunikation zwischen einem lokalen Netz (40, 41) und einem anderen Netz, oder in einem Gateway (80, 81, 22).

6. Verfahren nach einem der vorhergehenden Ansprüche, umfassend den Schritt des Verschlüsselns der kopierten Informationen vor ihrer Übertragung an das wenigstens eine Überwachungsmittel (12) oder das Abhörsteuerungsmittel (10).

7. Verfahren nach einem der vorhergehenden Ansprüche, umfassend den Schritt des Verschlüsselns aller abhörbezogenen Informationen, die z.B. zwischen dem Abhörsteuerungsmittel (10) und dem wenigstens einen Überwachungsmittel (12) übertragen werden.

8. Verfahren nach einem der vorhergehenden Ansprüche, wobei die abhörbezogenen Informationen Zeitdaten zum Identifizieren des Anfangs, des Endes und der Dauer einer Verbindung zwischen zwei Benutzeridentitäten umfassen.

9. Verfahren nach einem der vorhergehenden Ansprüche, umfassend den Schritt des Speicherns wenigstens einer Benutzeridentität, deren Kommunikation mit anderen Benutzeridentitäten abgehört werden soll, im Abhörsteuerungsmittel (10).

10. Verfahren nach einem der vorhergehenden Ansprüche, umfassend den Schritt des Übertragens von Informationen über die Adressen von kommunizierenden Benutzeridentitäten, deren Kommunikation abgehört werden soll, und die Adresse des wenigstens einen Überwachungsmittels (12) vom Abhörsteuerungsmittel (10) an das wenigstens eine des wenigstens einen Abhörmittels (11).

11. Abhörsystem zum Abhören von Paketen in einem paketorientierten Netz (1), umfassend wenigstens ein Abhörmittel (11) zum Abhören und Kopieren von Informationen aus einem Paket, das im Netz (1) übertragen wird, eine Abhörsteuerungsmittel (10)-Einrichtung in einem Knoten (9, 22) im Netz (1) zum Steuern des wenigstens einen Abhörmittels (11), und wenigstens ein Überwachungsmittel (12) zum Überwachen von kopierten Informationen, die von dem wenigstens einen Abhörmittel (11) übertragen werden, und Kommunizieren mit dem Abhörsteuerungsmittel (10),
**dadurch gekennzeichnet, dass**
das Abhörsteuerungsmittel (10) so ausgelegt ist, dass es ein Signal an das Abhörmittel (11) überträgt, um das Abhörmittel (11) anzuweisen, die Informationen in das wenigstens eine Überwachungsmittel (12) zu kopieren, und abhörbezogene Informationen, wie beispielsweise eine Rufkennung, Benutzeridentitäten, den Benutzeridentitäten zugeordnete Adressen und Dienstinformationen, an das Überwachungsmittel (12) überträgt, um das Überwachungsmittel (12) zum Empfangen der Informationen vom Abhörmittel (11) vorzubereiten.

12. Abhörsystem nach Anspruch 11, wobei eines des wenigstens einen Abhörmittels (11) geeignet ist, um in einem Router (20, 21, 22) installiert zu werden.

13. Abhörsystem nach Anspruch 11 oder 12, wobei eines des wenigstens einen Abhörmittels (11) geeignet ist, um in einem Gateway (80, 81, 22) installiert zu werden.

14. Abhörsystem nach Anspruch 11, wobei eines des wenigstens einen Abhörmittels (11) geeignet ist, um in einer Agentenvorrichtung (210, 211, 22) installiert zu werden.

15. Abhörsystem nach einem der Ansprüche 11 bis 14, wobei die kopierten Informationen vom Abhörmittel (11) an das Abhörsteuerungsmittel (10) übertragen werden, welches die kopierten Informationen anschließend an das Überwachungsmittel (12) überträgt.

16. Abhörsystem nach Anspruch 11, wobei es sich bei dem Knoten (22) um ein Gateway handelt und eines des wenigstens einen Abhörmittels (11) geeignet ist, um im Knoten (22) installiert zu werden.

17. Abhörsystem nach Anspruch 16, wobei das eine des wenigstens einen Abhörmittels (11) ein Programmmodul (11"), das in einem ersten Speichermittel (250, 251) gespeichert ist, das einer ersten Verarbeitungseinheit (240) zugeordnet ist, und einen Hauptteil (11') umfasst, der in einem zweiten Speichermittel (252, 253) gespeichert ist, das einer zweiten Verarbeitungseinheit (230) zugeordnet ist.

18. Abhörsystem nach Anspruch 16, wobei das Abhörsteuerungsmittel (10) ein Programmmodul (10"), das in einem ersten Speichermittel (250, 251) gespeichert ist, das einer ersten Verarbeitungseinheit (240) zugeordnet ist, und einen Hauptteil (10') umfasst, der in einem zweiten Speichermittel (252, 253) gespeichert ist, das einer zweiten Verarbeitungseinheit (230) zugeordnet ist.

19. Knoten (9, 22) in einem paketorientierten Netz (1), umfassend ein Abhörsteuerungsmittel (10), das so ausgelegt ist, dass es wenigstens ein Abhörmittel (11) zum Abhören und Kopieren von Informationen aus einem Paket steuert, das im Netz (1) übertragen wird, und einen ersten Port (12), der so ausgelegt ist, dass er das Abhörsteuerungsmittel (10) mit einem Überwachungsmittel (12) zum Überwachen von abgehörten Informationen verbindet, **dadurch gekennzeichnet, dass**
ein zweiter Port (171) zum Verbinden des Abhörsteuerungsmittels (10) mit dem Abhörmittel (11) enthalten und so ausgelegt ist, dass er ein Signal überträgt, um das Abhörmittel (11) anzuweisen, die Informationen in das Überwachungsmittel (12) zu kopieren, und
wobei der erste Port (170) so ausgelegt ist, dass er abhörbezogene Informationen, wie beispielsweise eine Rufkennung, Benutzeridentitäten, den Benutzeridentitäten zugeordnete Adressen und Dienstinformationen, vom Abhörsteuerungsmittel (10) an das Überwachungsmittel (12) überträgt, um das Überwachungsmittels (12) zum Empfangen der Informationen vorzubereiten;

20. Knoten (9, 22) nach Anspruch 19, wobei wenigstens eine Benutzeridentität, deren Kommunikation mit anderen Benutzeridentitäten abgehört werden soll, im Abhörsteuerungsmittel (10) gespeichert ist.

21. Knoten (9, 22) nach Anspruch 19 oder 20, umfassend einen zweiten Port (171) zum Senden und Empfangen von Informationen von dem wenigstens einen Abhörmittel (11).

22. Knoten (22) nach einem der Ansprüche 19 bis 21, wobei eines des wenigstens einen Abhörmittels (11) im Knoten (22) installiert ist.

23. Knoten (22) nach Anspruch 22, wobei das eine des wenigstens einen Abhörmittels (11) ein Programmmodul (11"), das in einem ersten Speichermittel (250, 251) gespeichert ist, das einer ersten Verarbeitungseinheit (240) zugeordnet ist, und einen Hauptteil (11') umfasst, der in einem zweiten Speichermittel (252, 253) gespeichert ist, das einer zweiten Verarbeitungseinheit (230) zugeordnet ist.

24. Knoten (22) nach Anspruch 22, wobei das Abhörsteuerungsmittel (10) ein Programmmodul (10 "), das in einem ersten Speichermittel (250, 251) gespeichert ist, das einer ersten Verarbeitungseinheit (240) zugeordnet ist, und einen Hauptteil (10') umfasst, der in einem zweiten Speichermittel (252, 253) gespeichert ist, das einer zweiten Verarbeitungseinheit (230) zugeordnet ist.

25. Überwachungsmittel (12) zum Überwachen von kopierten Informationen aus einem abgehörten Paket in einem paketorientierten Netz (1), umfassend einen Port (172) zum Verbinden des Überwachungsmittels (12) mit einem Abhörsteuerungsmittel (10) zum Steuern wenigstens eines Abhörmittels (11); **dadurch gekennzeichnet, dass**
das Überwachungsmittel so ausgelegt ist, dass es abhörbezogene Informationen, wie beispielsweise eine Rufkennung, Benutzeridentitäten, den Benutzeridentitäten zugeordnete Adressen und Dienstinformationen, vom Abhörsteuerungsmittel (10) empfängt, um das Überwachungsmittel (12) zum Empfangen der kopierten Informationen von dem wenigstens einen Abhörmittel (11) vorzubereiten.

26. Überwachungsmittel (12) nach Anspruch 25, umfassend Aufzeichnungsmittel (131) und wenigstens ein Anzeigemittel (18) zum Aufzeichnen bzw. Anzeigen von Informationen, die durch das Abhörsteuerungsmittel (10) oder ein Abhörmittel (11) zum Abhören und Kopieren von Informationen im Paket gesendet werden.

27. Überwachungsmittel (12) nach Anspruch 25 oder 26, umfassend Kommunikationsmittel (131) zum Übertragen von Bestätigungen oder Anweisungen an das Abhörsteuerungsmittel (10).

28. Agentenvorrichtung (210, 211, 22) in einem paketorientierten Netz (40), umfassend ein Abhörmittel (11) zum Abhören und Kopieren von Informationen aus einem Paket, das im paketorientierten lokalen Netz (40, 41) übertragen wird, und einen Port (177), der so ausgelegt ist, dass er die Agentenvorrichtung (210, 211, 22) mit einem Abhörsteuerungsmittel (10) zum Steuern des Abhörmittels (11) verbindet,
**dadurch gekennzeichnet, dass**
die Agentenvorrichtung so ausgelegt ist, dass sie ein Signal vom Abhörsteuerungsmittel (10) empfängt, angewiesen zu werden, die Informationen in das wenigstens eine Überwachungsmittel (12) zu kopieren, und die Informationen an das Überwachungsmittel (12) überträgt.

29. Agentenvorrichtung (210, 211) nach Anspruch 28, wobei die Agentenvorrichtung (210, 211) so ausgelegt ist, dass sie mit wenigstens einem Überwachungsmittel (12) zum Überwachen von kopierten Informationen aus dem Paket verbunden ist, wobei die kopierten Informationen durch die Agentenvorrichtung (210, 211) direkt an das Überwachungsmittel (12) oder über das Abhörsteuerungsmittel (12) übertragen werden.

30. Agentenvorrichtung (22) nach Anspruch 28, wobei das Abhörmittel (11) ein Programmmodul (11"), das in einem ersten Speichermittel (250, 251) gespeichert ist, das einer ersten Verarbeitungseinheit (240) zugeordnet ist, und einen Hauptteil (11') umfasst, der in einem zweiten Speichermittel (252, 253) gespeichert ist, das einer zweiten Verarbeitungseinheit (230) zugeordnet ist, und die Agentenvorrichtung (2) so ausgelegt ist, dass sie mit wenigstens einem Überwachungsmittel (12) zum Überwachen von kopierten Informationen aus dem Paket verbunden ist, wobei die kopierten Informationen durch das Abhörmittel (11) direkt an das Überwachungsmittel (12) übertragen werden.

31. Agentenvorrichtung (22) nach Anspruch 30, wobei das Abhörsteuerungsmittel (10) ein Programmmodul (10"), das in einem ersten Speichermittel (250, 251) gespeichert ist, das einer ersten Verarbeitungseinheit (240) zugeordnet ist, und einen Hauptteil (10') umfasst, der in einem zweiten Speichermittel (252, 253) gespeichert ist, das einer zweiten Verarbeitungseinheit (230) zugeordnet ist.

32. Abhörcomputerprogramm (11), umfassend:
computerlesbare Codemittel, die so konfiguriert sind, dass sie ein Abhören und Kopieren von Informationen in einem Paket bewirken, das in einem Kommunikationsnetz (40, 41) übertragen wird;
computerlesbare Codemittel, die so konfiguriert sind, dass sie eine Kommunikation zwischen dem Abhörcomputerprogramm (11) und einem Abhörsteuerungscomputerprogramm (10) zum Steuern des Abhörcomputerprogramms (11) ermöglichen und eine Übertragung von kopierten Informationen an ein Überwachungsmittel (12) zum Überwachen der kopierten Informationen bewirken;
**dadurch gekennzeichnet, dass**
das computerlesbare Codemittel so konfiguriert ist, dass es ein Signal empfängt, um das Abhörmittel (11) anzuweisen, die Informationen in das Überwachungsmittel (12) zu kopieren, und eine direkte Übertragung der kopierten Informationen an das Überwachungsmittel (12) bewirkt.

33. Abhörcomputerprogramm (11) nach Anspruch 32, umfassend computerlesbare Codemittel, die so konfiguriert sind, dass sie eine Übertragung von kopierten Informationen an das Abhörsteuerungscomputerprogramm (10) bewirken.

34. Abhörcomputerprogramm nach Anspruch 32, umfassend ein Programmmodul (11"), das geeignet ist, um in einem ersten Speichermittel (250, 251) gespeichert zu werden, das einer ersten Verarbeitungseinheit (24) zugeordnet ist, und einen Hauptteil (11'), der geeignet ist, um in einem zweiten Speichermittel (25, 253) gespeichert zu werden, das einer zweiten Verarbeitungseinheit (230) zugeordnet ist, wobei das Programmmodul (11") die computerlesbaren Codemittel umfasst, die so konfiguriert sind, dass sie ein Abhören und Kopieren von Informationen im Paket bewirken, das im Kommunikationsnetz (40, 41) übertragen wird, und der Hauptteil (11") die computerlesbaren Codemittel umfasst, die so konfiguriert sind, dass sie eine Kommunikation zwischen dem Abhörcomputerprogramm (11) und dem Abhörsteuerungscomputerprogramm (10) ermöglichen.

35. Computerprogrammprodukt, umfassend ein auf Computern verwendbares Medium (152, 153, 154, 200) und ein Abhörcomputerprogramm (11) nach Anspruch 32, wobei das Abhörcomputerprogramm (11) auf dem auf Computern verwendbaren Medium (152, 153, 154, 200) aufgezeichnet ist.

36. Agentencomputerprogramm (60, 61), das in einer Agentenvorrichtung (210, 211) eines lokalen Netzes (40, 41) installiert ist und computerlesbare Codemittel zum Vereinfachen von Firewall-Definitionen und Beenden einer Kommunikation zwischen dem lokalen Netz (40, 41) und einem anderen Netz umfasst, wobei das Agentencomputerprogramm (60, 61) ferner ein Abhörcomputerprogramm (11) nach Anspruch 32 oder Anspruch 32 und 33 oder Anspruch 32, 33 und 35 umfasst.

37. Abhörsteuerungscomputerprogramm (10), umfassend:
computerlesbare Codemittel, die so konfiguriert sind, dass sie ein Steuern wenigstens eines Abhörcomputerprogramms (11) bewirken, welches Informationen in einem Paket abhört und kopiert, das in einem paketorientierten Netz (1) übertragen wird;
computerlesbare Codemittel, die so konfiguriert sind, dass sie eine Kommunikation zwischen dem Abhörsteuerungscomputerprogramm (10) und einem Überwachungsmittel (12) zum Überwachen von kopierten Informationen aus dem Paket ermöglichen;
computerlesbare Codemittel, die so konfiguriert sind, dass sie eine Kommunikation zwischen dem Abhörsteuerungscomputerprogramm (10) und einem Knoten (9, 22) ermöglichen,
**dadurch gekennzeichnet, dass**
das computerlesbare Codemittel so konfiguriert ist, dass es abhörbezogene Informationen, wie beispielsweise eine Rufkennung, Benutzeridentitäten, den Benutzeridentitäten zugeordnete Adressen und Dienstinformationen, vom Abhörsteuerungscomputerprogramm (10) an das Überwachungsmittel (12) überträgt, um das Überwachungsmittel (12) zum Empfangen der kopierten Informationen vorzubereiten, und das Abhörmittel (11) durch Übertragen eines Signals vom Abhörsteuerungsmittel (10) anweist, die Informationen in das wenigstens eine Überwachungsmittel (12) zu kopieren.

38. Abhörsteuerungscomputerprogramm (10) nach Anspruch 37, umfassend ein computerlesbares Codemittel, das so konfiguriert ist, dass es eine Übertragung von abhörbezogenen Informationen, wie beispielsweise einer Rufkennung, Benutzeridentitäten, den Benutzeridentitäten zugeordneten Adressen und Dienstinformationen, an das Überwachungsmittel (12) bewirkt.

39. Abhörsteuerungscomputerprogramm (10) nach einem der Ansprüche 37 bis 38, umfassend ein computerlesbares Codemittel, das so konfiguriert ist, dass es ein Speichern wenigstens einer Benutzeridentität, deren Kommunikation mit anderen Benutzeridentitäten abgehört werden soll, im Abhörsteuerungscomputerprogramm (10) ermöglicht.

40. Abhörsteuerungscomputerprogramm (10) nach Anspruch 37, umfassend computerlesbare Codemittel, die so konfiguriert sind, dass sie eine positive oder negative Antwort auf eine Abhöranfrage vom Knoten (9) dessen bewirken, ob ein Paket abgehört werden soll, das mit einer Benutzeridentität in Beziehung steht, die mit dem Knoten verbunden ist.

41. Abhörsteuerungscomputerprogramm (10) nach einem der Ansprüche 37 bis 40, umfassend computerlesbare Codemittel, die so konfiguriert sind, dass sie ein Empfangen der kopierten Informationen, die durch das Abhörsteuerungscomputerprogramm (11) gesendet werden, und ein anschließendes Übertragen der kopierten Informationen an das Überwachungsmittel (12) bewirken.

42. Abhörsteuerungscomputerprogramm (10) nach einem der Ansprüche 37 bis 41, umfassend computerlesbare Codemittel, die so konfiguriert sind, dass sie ein Stoppsignal bewirken, welches an das Abhörcomputerprogramm (11) gesendet wird, um das Abhören und Kopieren des Pakets zu stoppen.

43. Abhörsteuerungscomputerprogramm (10) nach einem der Ansprüche 37 bis 42, umfassend computerlesbare Codemittel, die so konfiguriert sind, dass sie ein Verschlüsseln aller Informationen bewirken, die durch das Abhörsteuerungscomputerprogramm (10) übertragen werden.

44. Abhörsteuerungscomputerprogramm (10) nach einem der Ansprüche 37 bis 43, umfassend ein Programmmodul (10"), welches geeignet ist, um in einem ersten Speichermittel (250, 251) gespeichert zu werden, das einer ersten Verarbeitungseinheit (240) zugeordnet ist, und einen Hauptteil (10'), der geeignet ist, um in einem zweiten Speichermittel (252, 253) gespeichert zu werden, das einer zweiten Verarbeitungseinheit (230) zugeordnet ist, wobei das Programmmodul (10") einen Teil des computerlesbaren Codemittels umfasst und der Rest des computerlesbaren Codemittels im Hauptteil (10`) ist.

45. Computerprogrammprodukt, umfassend ein auf Computern verwendbares Medium (150, 200) und ein Abhörsteuerungscomputerprogramm (10) nach Anspruch 37, wobei das Abhörsteuerungscomputerprogramm (10) auf dem auf Computern verwendbaren Medium (150, 200) aufgezeichnet ist.

## Revendications

1. Procédé d'interception de paquets dans un réseau orienté paquets (1), comprenant les étapes consistant à :
activer un moyen de commande d'interception (10) pour commander au moins un moyen d'interception (11) pour intercepter et copier une information à partir d'un paquet étant transmis dans ledit réseau (1) ;
amorcer une communication entre ledit moyen de commande d'interception (10) et au moins un moyen de surveillance (12) pour surveiller une information copiée à partir dudit paquet ;
établir une connexion entre ledit moyen de commande d'interception (10) et au moins un desdits au moins un moyen d'interception (11) ;
**caractérisé par** les étapes consistant à
transmettre une information relative à l'interception, comme un identifiant d'appel, des identités d'utilisateur, des adresses associées auxdites identités d'utilisateur et des informations de service, du moyen de commande d'interception (10) vers le moyen de surveillance (12) pour préparer le moyen de surveillance (12) à recevoir l'information copiée ;
enjoindre audit moyen d'interception (11) de copier ladite information sur ledit au moins un moyen de surveillance (12) en transmettant un signal à partir du moyen de commande d'interception (10) ; et
ledit moyen d'interception (11) transmettant ladite information copiée audit au moins un moyen de surveillance (12).

2. Procédé selon la revendication 1, comprenant l'étape consistant à :
fournir une information concernant une identité d'utilisateur audit moyen de commande d'interception (10), qui analyse ladite identité d'utilisateur afin de déterminer si un paquet relatif à ladite identité d'utilisateur doit être intercepté.

3. Procédé selon la revendication 1 ou 2, comprenant l'étape d'identification du type dudit paquet.

4. Procédé selon la revendication 3, dans lequel ladite identification du type dudit paquet est faite par au moins un dudit moyen de commande d'interception (10), dudit au moins un moyen d'interception (11) et dudit au moins un moyen de surveillance (12).

5. Procédé selon une quelconque des revendications précédents, comprenant l'étape d'installation dudit au moins un moyen d'interception (11) dans un routeur (20,21,22) dans ledit réseau (1), dans un appareil agent (210,211,22) pour simplifier des définitions de pare-feu et mettre fin à la communication entre un réseau local (40,41) et un autre réseau, ou dans une passerelle (80,81,82).

6. Procédé selon une quelconque des revendications précédentes, comprenant l'étape de cryptage de ladite information copiée avant qu'elle soit transmise audit au moins un moyen de surveillance (12) ou audit moyen de commande d'interception (10).

7. Procédé selon une quelconque des revendications précédentes, comprenant l'étape de cryptage de toute information relative à l'interception, par ex. étant transmise entre ledit moyen de commande d'interception (10) et ledit au moins un moyen de surveillance (12).

8. Procédé selon une quelconque des revendications précédentes, dans lequel ladite information relative à l'interception comprend des données temporelles pour identifier le début, la fin et la durée d'une connexion entre deux identités d'utilisateur.

9. Procédé selon une quelconque des revendications précédentes, comprenant l'étape de mémorisation d'au moins une identité d'utilisateur, dont la communication avec d'autres identités d'utilisateur doit être interceptée, dans ledit moyen de commande d' interception (10).

10. Procédé selon une quelconque des revendications précédentes, comprenant l'étape de transmission d'une information concernant les adresses des identités d'utilisateur en communication, dont la communication doit être interceptée, et l'adresse dudit au moins un moyen de surveillance (12) depuis ledit moyen de commande d'interception (10) vers ledit au moins desdits au moins un moyen d'interception (11).

11. Système d'interception pour intercepter des paquets dans un réseau orienté paquets (1), comprenant au moins un moyen d'interception (11) pour intercepter et copier une information à partir d'un paquet étant transmis dans ledit réseau (1), une installation de moyen de commande d'interception (10) dans un noeud (9,22) dans ledit réseau (1) pour commander ledit au moins un moyen d'interception (11), et au moins un moyen de surveillance (12) pour surveiller une information copiée étant transmise depuis ledit au moins un moyen d'interception (11) et communicant avec ledit moyen de commande d'interception (10),
**caractérisé en ce que**
le moyen de commande d'interception (10) est adapté afin de transmettre un signal audit moyen d'interception (11) pour enjoindre audit moyen d'interception (11) de copier ladite information sur ledit au moins in moyen de surveillance (12), et pour transmettre une information relative à l'interception, comme un identifiant d'appel, des identités d'utilisateur, des adresses associées audites identités d'utilisateur et des informations de service, au moyen de surveillance (12) pour préparer le moyen de surveillance (12) à recevoir ladite information depuis le moyen d'interception (11).

12. Système d'interception selon la revendication 11, dans lequel un desdits au moins un moyen d'interception (11) est adapté afin d'être installé dans un routeur (20,21,22).

13. Système d'interception selon la revendication 11 ou 12, dans lequel un desdits au moins un moyen d'interception (11) est adapté afin d'être installé dans une passerelle (80,81,22).

14. Système d'interception selon une quelconque des revendications 11 à 13, dans lequel un desdits au moins un moyen d'interception (11) est adapté afin d'être installé dans un appareil agent (210,211,22).

15. Système d'interception selon une quelconque des revendications 11 à 14, dans lequel ladite information copiée est d'abord transmise dudit moyen d'interception (11) audit moyen de commande d'interception (10), qui transmet ensuite ladite information copiée audit moyen de surveillance (12).

16. Système d'interception selon la revendication 11, dans lequel ledit noeud (22) est une passerelle, un appareil agent ou un routeur, et un desdits au moins un moyen d'interception (11) est installé dans ledit noeud (22).

17. Système d'interception selon la revendication 16, dans lequel ledit un desdits au moins un moyen d'interception (11) comprend un module de programme (11") mémorisé dans un premier moyen de mémoire (250,251) associé à une première unité de traitement (240) et un sous-système principal (11') mémorisé dans un second moyen de mémoire (252,253) associé à une seconde unité de traitement (230).

18. Système d'interception selon la revendication 16, dans lequel ledit moyen de commande d'interception (10) comprend un module de programme (10") mémorisé dans un premier moyen de mémoire (250,251) associé à une première unité de traitement (240) et un sous-système principal (10") mémorisé dans un second moyen de mémoire (252,253) associé à une seconde unité de traitement (230).

19. Noeud (9,22) dans un réseau orienté paquet (1), comprenant un moyen de commande d'interception (10) adapté afin de commander au moins un moyen d'interception (11) pour intercepter et copier une information à partir d'un paquet étant transmis dans ledit réseau (1), et un premier port (170) adapté afin de connecter ledit moyen de commande d'interception (10) à un moyen de surveillance (12) pour surveiller une information interceptée, **caractérisé en ce que**
un second port (171) est compris pour connecter ledit moyen de commande d'interception (10) avec ledit moyen d'interception (11) et adapté pour transmettre un signal pour enjoindre audit moyen d'interception (11) de copier ladite information audit moyen de surveillance (12), et
dans lequel le premier port (170) est adapté afin de transmettre une information relative à l'interception, comme un identifiant d'appel, des identités d'utilisateur, des adresses associées auxdites identités d'utilisateur et des informations de service, au moyen de surveillance (12) pour préparer le moyen de surveillance (12) à recevoir ladite information.

20. Noeud (9,22) selon la revendication 19, dans lequel au moins une identité d'utilisateur, dont la communication avec d'autres identités d'utilisateur doit être interceptée, est mémorisée dans ledit moyen de commande d'interception (10).

21. Noeud (9,22) selon la revendication 19 ou 20, comprenant un second port (171) pour envoyer et recevoir des informations provenant d'au moins un moyen d'interception (11).

22. Noeud (22) selon une quelconque des revendications 19 à 21, dans lequel un desdits au moins un moyen d'interception (11) est installé dans ledit noeud (22).

23. Noeud (22) selon la revendication 22, dans lequel un desdits au moins un moyen d'interception (11) comprend un module de programme (11") mémorisé dans un premier moyen de mémoire (250,251) associé à une première unité de traitement (240) et un sous-système principal (11') mémorisé dans un second moyen de mémoire (252,253) associé à une seconde unité de traitement (230).

24. Noeud (22) selon la revendication 22, dans lequel ledit moyen de commande d'interception (10) comprend un module de programme (10") mémorisé dans un premier moyen de mémoire (250,251) associé à une première unité de traitement (240) et un sous-système principal (10") mémorisé dans un second moyen de mémoire (252,253) associé à une seconde unité de traitement (230).

25. Moyen de surveillance (12) pour surveiller une information copiée à partir d'un paquet intercepté dans un réseau orienté paquets (1), comprenant un port (172) pour connecter ledit moyen de surveillance (12) avec un moyen de commande d'interception (10) pour commander au moins un moyen d'interception (11) ;
**caractérisé en ce que**
le moyen de surveillance est adapté afin de recevoir une information relative à l'interception, comme un identifiant d'appel, des identités d'utilisateur, des adresses associées auxdites identités d'utilisateur et des informations de service, en provenance dudit moyen de commande d'interception (12), pour préparer le moyen de surveillance (12) afin de recevoir l'information copiée à partir dudit au moins un moyen d'interception (11).

26. Moyen de surveillance (12) selon la revendication 25, comprenant un moyen d'enregistrement (131) et au moins un moyen d'affichage (18) pour enregistrer et afficher une information envoyée soit par ledit moyen de commande d'interception (10), soit par un moyen d'interception (11) pour intercepter et copier une information dans ledit paquet.

27. Moyen de surveillance (12) selon la revendication 25 ou 26, comprenant un moyen de communication (131) pour transmettre des accusés de réception ou des ordres audit moyen de commande d'interception (10).

28. Appareil agent (210,211,22) dans un réseau local orienté paquets (40,41), comprenant un moyen d'interception (11) pour intercepter et copier ne information à partir d'un paquet étant transmis dans ledit réseau local orienté paquet (40,41) et un port (177) adapté afin de connecter ledit appareil agent (210,311,22) avec un moyen de commande d'interception (10) pour commander ledit moyen d'interception (11),
**caractérisé en ce que**
l'appareil agent est adapté afin de recevoir un signal provenant dudit moyen de commande d'interception (10) ayant l'ordre de copier ladite information sur au moins un moyen de surveillance (12), et de transmettre ladite information audit moyen de surveillance (12).

29. Appareil agent (210,211) selon la revendication 28, dans lequel ledit appareil agent (210,211) est adapté afin d'être connecté à au moins un moyen de surveillance (12) pour surveiller une information copiée à partir dudit paquet, dans lequel ladite information copiée est transmise par ledit appareil agent (210,211) directement audit moyen de surveillance (12) ou par l'intermédiaire dudit moyen de commande d'interception (12).

30. Appareil agent (22) selon la revendication 28, dans lequel ledit moyen d'interception (11) comprend un module de programme (11") mémorisé dans un premier moyen de mémoire (250,251) associé à une première unité de traitement (240) et un sous-système principal (11') mémorisé dans un second moyen de mémoire (252,253) associé à une seconde unité de traitement (230) et ledit appareil agent (22) étant adapté afin d'être connecté à au moins un moyen de surveillance (12) pour surveiller une information copiée à partir dudit paquet, dans lequel ladite information copiée est transmise par ledit moyen d'interception (11) directement audit moyen de surveillance (12).

31. Appareil agent (22) selon la revendication 30, dans lequel ledit moyen de commande d'interception (10) comprend un module de programme (10") mémorisé dans ledit premier moyen de mémoire (250,251) associé à ladite première unité de traitement (240) et un sous-système principal (10') mémorisé dans ledit second moyen de mémoire (252,253) associé à ladite seconde unité de traitement (230).

32. Programme informatique d'interception (11) comprenant :
un moyen de code lisible par ordinateur configuré afin de provoquer une interception et une copie d'informations dans un paquet étant transmis dans un réseau de communication (40,41) ;
un moyen de code lisible par ordinateur configuré afin de permettre une communication entre ledit programme informatique d'interception (11) et un programme informatique de commande d'interception (10) pour commander ledit programme informatique d'interception (11) ; et de provoquer une transmission d'informations copiées vers un moyen de surveillance (12) pour surveiller ladite information copiée ;
**caractérisé en ce que**
le moyen de code lisible par ordinateur est configuré afin de recevoir un signal pour enjoindre audit moyen d'interception (11) de copier ladite information sur ledit moyen de surveillance (12), et de provoquer une transmission directe de l'information copiée audit moyen de surveillance (12).

33. Programme informatique d'interception (11) selon la revendication 32, comprenant un moyen de code lisible par ordinateur configuré afin de provoquer une transmission des informations copiées vers ledit programme informatique de commande d'interception (10).

34. Programme informatique d'interception selon la revendication 32, comprenant un module de programme (11"), qui est adapté afin d'être mémorisé dans un premier moyen de mémoire (250,251) associé à une première unité de traitement (240), et un sous-système principal (11') adapté afin d'être mémorisé dans un second moyen de mémoire (252,253) associé à une seconde unité de traitement (230), dans lequel ledit module de programme (11") comprend ledit moyen de code lisible par ordinateur configuré afin de provoquer une interception et une copie des informations dans ledit paquet étant transmis dans ledit réseau de communication (40,41) et ledit sous-système principal (11') comprend un moyen de code lisible par ordinateur configuré afin de permettre une communication entre ledit programme informatique d'interception (11) et ledit programme informatique de commande d'interception (10).

35. Produit de programme informatique, comprenant un support utilisable par ordinateur (153,153,154,200) et un programme informatique d'interception (11) selon la revendication 32, ledit programme informatique d'interception (11) étant enregistré sur ledit support utilisable par ordinateur (152,153,154,200).

36. Programme informatique agent (60,61) étant installé dans un appareil agent (210,211) d'un réseau local (40,41), comprenant un moyen de code lisible par ordinateur pour simplifier des définitions de pare-feu et mettre fin à des communications entre ledit réseau local (40,41) et un autre réseau, ledit programme informatique agent (60,61) comprend en outre un programme informatique d'interception (11) selon la revendication 32, ou les revendications 32 et 33, ou les revendications 32n33 et 35.

37. Programme informatique de commande d'interception (10) comprenant :
un moyen de code lisible par ordinateur configuré afin de provoquer une commande d'au moins un programme informatique d'interception (11), qui intercepte et copie des informations dans un paquet étant transmis dans un réseau orienté paque (1) ;
un moyen de code lisible par ordinateur configuré afin de permettre une communication entre ledit programme informatique de commande d'interception (10) et un moyen de surveillance (12) pour surveiller une information copiée à partir dudit paquet ;
un moyen de code lisible par ordinateur configuré afin de permettre une communication entre ledit programme informatique de commande d'interception (10) et un noeud (9,22),
**caractérisé en ce que**
le moyen de code lisible par ordinateur est configuré afin de transmettre une information relative à l'interception, comme un identifiant d'appel, des identités d'utilisateur, des adresses associées auxdites identités d'utilisateur et des informations de service, du programme informatique de commande d'interception (10) au moyen de surveillance (12) pour préparer le moyen de surveillance (12) à recevoir l'information copiée, et d'enjoindre audit moyen d'interception (11) de copier ladite information sur ledit au moins un moyen de surveillance (12) en transmettant un signal depuis ledit moyen de commande d'interception (10).

38. Programme informatique de commande d'interception (10) selon la revendication 37, comprenant un moyen de code lisible par ordinateur configuré afin de provoquer une transmission d'information relative à l'interception, comme un identifiant d'appel, des identités d'utilisateur, des adresses associées auxdites identités d'utilisateur et des informations de service, audit moyen de surveillance (12).

39. Programme informatique de commande d'interception (10) selon une quelconque des revendications 37-38, comprenant un moyen de code lisible par ordinateur configuré afin de permettre une mémorisation d'au moins une identité d'utilisateur, dont la communication avec d'autres identités d'utilisateur doit être interceptée dans ledit programme informatique de commande d'interception (10).

40. Programme informatique de commande d'interception (10) selon la revendication 37, comprenant un moyen de code lisible par ordinateur configuré afin de provoquer une réponse positive ou négative à une demande d'interception provenant dudit noeud (9) de ce que un paquet relatif à une identité d'utilisateur connecté audit noeud (9) doit être intercepté.

41. Programme informatique de commande d'interception (10) selon une quelconque des revendications 37 à 40, comprenant un moyen de code lisible par ordinateur configuré afin de provoquer une réception desdites informations copiées transmises par ledit programme informatique d'interception (11) et ensuite transmettre lesdites informations copiées audit moyen de surveillance (12).

42. Programme informatique de commande d'interception (10) selon une quelconque des revendications 37 à 41, comprenant un moyen de code lisible par ordinateur configuré afin de provoquer un signal d'arrêt, qui est transmis vers ledit programme informatique d'interception (11) afin d'arrêter l'interception et la copie dudit paquet.

43. Programme informatique de commande d'interception (10) selon une quelconque des revendications 37 à 42, comprenant un moyen de code lisible par ordinateur configuré afin de provoquer le cryptage de toutes les informations qui sont transmises par ledit programme informatique de commande d'interception (10).

44. Programme informatique de commande d'interception (10) selon une quelconque des revendications 37 à 43, comprenant un module de programme (10"), qui est adapté afin d'être mémorisé dans un premier moyen de mémoire (250,251) associé à une première unité de traitement (240), et un sous-système principal (10') adapté afin d'être mémorisé dans un second moyen de mémoire (252,253) associé à une seconde unité de traitement (230), dans lequel ledit module de programme (10") comprend un sous-système dudit moyen de code lisible par ordinateur et le reste dudit moyen de code lisible par ordinateur est compris dans ledit sous-système principal (10').

45. Produit de programme informatique comprenant un support utilisable par ordinateur (150,200) et un programme informatique de commande d'interception (10) selon la revendication 37, ledit programme informatique de commande d'interception (10) étant enregistré sur ledit support utilisable par ordinateur (150,200).
